# EUROPÄISCHE PATENTSCHRIFT

(11) **EP 3 476 655 B1**
(45) Veröffentlichungstag und Bekanntmachung des Hinweises auf die Patenterteilung: **30.06.2021**
(21) Anmeldenummer: 18188747.2
(22) Anmeldetag: 13.08.2018
(51) Int. Cl.: B60R 9/048, B60R 9/10

(54) **TRÄGEREINHEIT FÜR EINE DACHTRÄGERANORDNUNG EINES KRAFTFAHRZEUGS**
SUPPORT UNIT FOR A ROOF HOLDER UNIT OF A MOTOR VEHICLE
UNITÉ PORTEUSE POUR UN DISPOSITIF SUPPORT DE TOIT D'UN VÉHICULE AUTOMOBILE

(30) Priorität: 25.10.2017 DE 102017219039
(43) Veröffentlichungstag der Anmeldung: 01.05.2019
(73) Patentinhaber: ATERA GmbH, 88299 Leutkirch im Allgäu (DE)
(72) Erfinder: Hinderhofer, Jürgen, 88400 Biberach (DE)
(74) Vertreter: Patentanwälte Ruff, Wilhelm, Beier, Dauster & Partner mbB

(56) Entgegenhaltungen:
- EP-B1- 2 977 269
- US-A1- 2015 028 076

## Beschreibung

Die Erfindung betrifft eine Trägereinheit gemäß dem Oberbegriff von Anspruch 1.

Eine derartige Trägereinheit ist im Bereich der Dachträgeranordnungen allgemein bekannt. Die bekannte Trägereinheit weist ein Trägerprofil auf, das in montiertem Zustand in Fahrzeuglängsrichtung über ein Fahrzeugdach erstreckt ist. Einends an dem Trägerprofil ist eine Fixiervorrichtung zur Fixierung einer Fahrradgabel vorgesehen. Die Fixiervorrichtung weist eine Aussparung zur Aufnahme einer der Fahrradgabel zugeordneten Radachse und eine relativ zu der Aussparung verlagerbare Spannbacke auf. Die Radachse ist mittels einer Verlagerung der Spannbacke fest in der Aussparung einspannbar. Zur Verlagerung der Spannbacke ist eine manuell betätigbare Stelleinheit vorgesehen. Die Stelleinheit ist als Hebelmechanismus ausgeführt und weist einen relativ zu dem Trägerprofil verschwenkbaren Bügelgriff auf, der mit der Spannbacke wirkverbunden ist.

Beispielsweise zeigt die US 2015/028076 A1 eine Trägereinheit, wobei zur Verlagerung der Spannbacke zwischen der Spann- und der Freigabeposition ein manuell betätigbarer Hebelmechanismus vorgesehen ist. Zudem ist ein Stellrad vorgesehen, das eine Einstellung der in der Spannposition wirkenden Spannkraft und/oder eine Einstellung der Größe der Aufnahmeaussparung ermöglicht.

Die EP 2 977 269 B1 zeigt eine weitere Trägereinheit, wobei als Stelleinheit wiederum ein Hebelmechanismus vorgesehen ist.

Die US 2015/028076 offenbart eine Trägereinheit für eine Dachträgeranordnung eines Kraftfahrzeugs mit einem Trägerprofil, nach dem Oberbegriff des Anspruchs 1.

Aufgabe der Erfindung ist es, eine Trägereinheit der eingangs genannten Art zu schaffen, die eine kompakte Bauweise und eine einfache sowie raumsparende Betätigung ermöglicht. Insbesondere soll eine möglichst universell anwendbare Trägereinheit geschaffen werden.

Diese Aufgabe wird durch eine Trägereinheit mit den Merkmalen des Anspruchs 1 gelöst. Durch die erfindungsgemäße Lösung können vergleichsweise geringe antriebsseitige Betätigungskräfte bauraumsparend in vergleichsweise hohe abtriebsseitige Spannkräfte übersetzt werden. Dies ermöglicht eine kompakte Bauweise. Zudem kann infolge der erfindungsgemäßen Drehbetätigung der Stelleinheit auf eine raumgreifende und im montierten Zustand ergonomisch nicht optimale Schwenkbetätigung der Stelleinheit verzichtet werden. Dies ermöglicht eine einfache und besonders raumsparende Betätigung. Durch die erfindungsgemäße Lösung ist zudem eine einfache manuelle Anpassung einer zur sicheren Fixierung der Fahrradgabel bzw. der Radachse erforderlichen Spannkraft ermöglicht. Denn die Spannkraft kann mittels einer entsprechenden Zustellung des Stellrads besonders einfach bedarfsgerecht variiert werden. Dies ermöglicht insbesondere eine universelle Anwendbarkeit der Trägereinheit in Bezug auf verschiedenartig ausgeführte Radachsen. Das Schraubgetriebe kann insbesondere in einem Gehäuse der Fixiervorrichtung, einem Gehäuse der Stelleinheit oder an dem Trägerprofil gelagert sein. Die Spannbacke kann - in Bezug auf einen bestimmungsgemäß montierten Zustand - lineargeführt und/oder verschwenkbar in vertikaler und/oder horizontaler Richtung zwischen der Freigabeposition und der Spannposition verlagerbar sein. Die Spannbacke kann beispielsweise an einem Gehäuse der Fixiervorrichtung, einem Gehäuse der Stelleinheit oder an dem Trägerprofil lineargeführt und/oder verschwenkbar gelagert sein. Das Stellrad kann um eine beliebig zur Längsrichtung des Trägerprofils orientierte Drehachse drehbetätigbar sein. Vorzugsweise ist die Drehachse des Stellrads im Wesentlichen in Längsrichtung des Trägerprofils erstreckt. Für eine besonders ergonomische Betätigung ist es vorteilhaft, wenn das Stellrad stirnendseitig an der Trägereinheit angeordnet ist. In dieser Beschreibung verwendete Richtungs- und Lageangaben, wie Fahrzeuglängs-, Fahrzeughoch- sowie Fahrzeugquerrichtung, oben, unten, vorne, frontseitig, hinten, rückseitig sowie seitlich, links und rechts, beziehen sich auf einen bestimmungsgemäß fahrzeugdachseitig montierten Zustand der Trägereinheit, wobei die Fixiervorrichtung in Richtung der Fahrzeugfront orientiert ist.

In Ausgestaltung der Erfindung ist das Stellrad um eine Drehachse drehbetätigbar, die im Wesentlichen in Längsrichtung des Trägerprofils erstreckt ist, und die Spannbacke ist im Wesentlichen in Längsrichtung des Trägerprofils lineargeführt zwischen der Freigabeposition und der Spannposition verlagerbar. Durch die derartige Anordnung der Drehachse des Stellrads wird eine besonders ergonomische Betätigbarkeit im montierten Zustand erreicht. Die rotatorische Betätigungsbewegung des Stellrads wird mittels des Schraubgetriebes vorzugsweise unmittelbar in eine translatorische Spann- bzw. Freigabebewegung der Spannbacke umgesetzt. Diese Ausgestaltung ist besonders bauraumsparend und konstruktiv mit einfachen Mitteln umsetzbar.

In weiterer Ausgestaltung der Erfindung weist das Schraubgetriebe eine drehbeweglich und axialfest gelagerte Gewindespindel, die drehfest mit dem Stirnrad verbunden ist, und eine axialbeweglich auf der Gewindespindel angeordnete sowie drehfest gelagerte Gewindemutter, die der Spannbacke zugeordnet ist, auf. Die Gewindespindel kann beispielsweise in einem Gehäuse der Fixiervorrichtung, einem Gehäuse der Stelleinheit oder an dem Trägerprofil gelagert sein. Das Stellrad ist antriebsseitig drehfest, beispielsweise form-, kraft- und/oder stoffschlüssig mit der Gewindespindel verbunden. Das Stellrad kann unmittelbar mit der Gewindespindel zusammengefügt sein. Alternativ kann das Stellrad mittels eines Getriebeglieds, wie beispielsweise einem Zahnrad, Schneckenrad oder dergleichen, wirkverbunden mit der Gewindespindel sein. Axialfest gelagert meint, dass die Gewindespindel bei einer Drehbetätigung des Stellrads keine Längsbewegung ausführt. Die Gewindemutter ist abtriebsseitig mit einem Gewindeabschnitt der Gewindespindel verschraubt. Dabei ist die Gewindemutter beispielsweise an einem Gehäuse der Fixiervorrichtung, einem Gehäuse der Stelleinheit oder an dem Trägerprofil drehfest abgestützt, so dass eine Drehbewegung der Gewindespindel in einer Axialbewegung der Gewindemutter übersetzt wird. Die Gewindemutter kann ein separat von der Spannbacke gefertigtes Bauteil sein, das mit der Spannbacke wirkverbunden ist. Alternativ kann die Gewindemutter durch einen Abschnitt der Spannbacke gebildet sein.

In weiterer Ausgestaltung der Erfindung ist das Stellrad relativ zu einem Gehäuse der Fixiervorrichtung lineargeführt verlagerbar zwischen einer Betätigungsposition, in der das Stellrad das Gehäuse stirnendseitig im Wesentlichen freistehend überragt, und einer Ruheposition, in der das Stellrad kompakt an dem Gehäuse angeordnet ist. Demzufolge kann das Stellrad in der Betätigungsposition einfach und sicher manuell gegriffen werden, da es das Gehäuse im Wesentlichen freistehend überragt. Demgegenüber ist das Stellrad in der Ruheposition kompakt an dem Gehäuse angeordnet, so dass insbesondere ein verringerter Luftwiderstand und eine raumsparende Anordnung erreicht werden. Von Vorteil bildet das Gehäuse eine außenliegende Mulde, Aussparung oder Vertiefung aus, in der das Stellrad in der Ruheposition angeordnet und in Umfangsrichtung wenigstens abschnittsweise umgriffen ist. Durch die partielle Abdeckung des Stellrads in Umfangsrichtung kann einer ungewollten Betätigung des Stellrads entgegengewirkt werden.

In weiterer Ausgestaltung der Erfindung ist eine abschließbare Verriegelungseinheit vorgesehen, mittels der das Stellrad in der Ruheposition drehfest und axialfest an dem Gehäuse verriegelbar ist. Demzufolge kann mittels der Verriegelungseinheit zum einen eine ungewollte Drehbetätigung des Stellrads verhindert werden. Zum anderen verhindert die Verriegelungseinheit, dass das Stellrad von der Ruhe- in die Betätigungsposition verlagerbar ist. Diese Ausgestaltung der Erfindung wirkt einem unbefugten Ausspannen der Fahrradgabel aus der Fixiervorrichtung entgegen und ermöglicht demnach einen Diebstahlschutz.

In weiterer Ausgestaltung der Erfindung ist das Stellrad auf einem Schaftabschnitt der Gewindespindel lineargeführt in Axialrichtung der Gewindespindel zwischen der Betätigungsposition und der Ruheposition verlagerbar. Demnach ist das Stellrad zwar in Umfangsrichtung drehfest, aber in Längsrichtung verschieblich auf der Gewindespindel angeordnet. Beispielsweise kann der Schaftabschnitt der Gewindespindel als Drei-, Vier- oder Vielkantprofil gefertigt sein, so dass zum einen eine drehfeste und zum anderen eine axial beweglich lineargeführte Verbindung zwischen dem Stellrad und der Gewindespindel erreicht wird.

Weiter gemäß der Erfindung ist die Aufnahmeaussparung in Form einer im Wesentlichen U-förmigen - in Bezug auf einen fahrzeugdachseitig montierten Zustand - nach oben offenen Rinne gestaltet und die Spannbacke ist derart keilförmig gestaltet, dass die Spannbacke in der Spannposition eine von oben nach unten gerichtete Spannkraftkomponente auf die Radachse bewirkt. Die U-förmige Rinne ist von Vorteil derart bemessen, dass verschiedenartig gestaltete Typen von Radachsen in der Aufnahmeaussparung aufgenommen werden können. Dabei gewährleistet die keilförmige Gestaltung der Spannbacke eine besonders zuverlässige und über einen weiten Durchmesserbereich durchmesserunabhängige Einspannung der Radachse.

In weiterer Ausgestaltung der Erfindung ist im Bereich der Aufnahmeaussparung wenigstens ein Befestigungselement zur lösbaren Befestigung des Trägerprofils mit einem in montiertem Zustand in Fahrzeugquerrichtung erstreckten Querträgerprofil der Dachträgeranordnung vorgesehen. Das Befestigungselement kann insbesondere in Form einer Schraube, eines Schnellspanners oder dergleichen ausgebildet sein. Da die Aufnahmeaussparung in Form einer im Wesentlichen U-förmigen Rinne ausgebildet ist, kann das Befestigungselement von Vorteil vertikal durch einen Grundabschnitt, der zwei einander gegenüberliegende Schenkel der Rinne miteinander verbindet, erstreckt sein.

In weiterer Ausgestaltung der Erfindung ist das Befestigungselement mittels der Spannbacke grundsätzlich manuell unzugänglich überdeckt, wobei die Spannbacke mittels einer manuellen Drehbetätigung des Stellrads in eine Funktionsposition verlagerbar ist, in der das Befestigungselement manuell zugänglich ist. Grundsätzlich manuell unzugänglich überdeckt meint, dass das Befestigungselement jedenfalls in der Spannposition derart abgedeckt ist, dass ein manuelles oder werkzeugbedingtes Lösen des Befestigungselements verhindert ist. Hierdurch wird auf einfache Weise ein Schutz gegen Diebstahl der Trägereinheit erreicht. Dabei kommt der Spannbacke eine vorteilhafte Doppelfunktion zu. Denn neben der eigentlichen Spannfunktion gewährleistet die Spannbacke den vorbeschriebenen Diebstahlschutz. Auf diese Weise kann auf eine gesonderte Diebstahlschutzeinrichtung verzichtet und die Anzahl der Baukomponenten der Trägereinheit verringert werden. In der Funktionsposition ist die Spannbacke derart verlagert, dass die Aufnahmeaussparung nach oben im Wesentlichen vollständig freigegeben ist. Dadurch kann das Befestigungselement leicht manuell oder mit einem Werkzeug erreicht und im Bedarfsfall gelöst oder mit dem Querträgerprofil verbunden werden.

In weiterer Ausgestaltung der Erfindung ist das Trägerprofil und/oder die Fixiervorrichtung in einem an die Aufnahmeaussparung angrenzenden Bereich mit einem Freischnitt versehen, der derart angeordnet und gestaltet ist, dass - in einem in der Fixiervorrichtung fixierten Zustand der Fahrradgabel - eine Kollision eines Bremssattels der Fahrradgabel mit dem Trägerprofil und/oder der Fixiervorrichtung vermieden ist. Zeitgemäße Fahrräder sind oftmals wenigstens vorderradseitig mit einem Scheibenbremssystem versehen. Ein solches Scheibenbremssystem weist eine felgenseitig montierte Bremsscheibe und einen gabelseitig montierten Bremssattel auf, die auf grundsätzlich bekannte Weise zusammenwirken. Eine solche mit einem Bremssattel versehene Fahrradgabel kann üblicherweise nicht ohne weitere Vorkehrungen in einer Trägereinheit nach dem Stand der Technik transportiert werden. Beispielsweise kann ein spezieller Adapter oder dergleichen notwendig sein, der einen Abstand zwischen dem Bremssattel und dem Trägerprofil derart erhöht, dass eine Bauteilkollision vermieden wird. Demzufolge ermöglicht der Freischnitt an dem Trägerprofil und/oder der Fixiervorrichtung in besonders einfacher und kostengünstig herstellbarer Weise eine universelle Anwendbarkeit der Trägereinheit, so dass auch eine mit einem Bremssattel versehene Fahrradgabel ohne weitere Vorkehrungen in der Fixiervorrichtung fixiert werden kann. Das Trägerprofil ist vorzugsweise ein offenes oder geschlossenes Leichtmetallprofil. Der Freischnitt kann spanend oder spanlos an dem Trägerprofil ausgebildet sein. Beispielsweise kann der Freischnitt aus dem Trägerprofil ausgefräst, ausgestanzt oder ausgeschnitten sein. Sofern der Freischnitt wenigstens abschnittsweise an der Fixiervorrichtung vorgesehen ist, ist es vorteilhaft, wenn dieser an einem Gehäuse der Fixiervorrichtung ausgebildet ist. Das Gehäuse kann beispielsweise in Form eines Kunststoffspritzgussbauteils ausgebildet sein, wobei der Freischnitt mittels einer entsprechenden Formgebung des Spritzgusswerkzeugs abgebildet ist.

In weiterer Ausgestaltung der Erfindung ist der Freischnitt - in Bezug auf eine vertikal orientierte Blickrichtung - bogenförmig, insbesondere kreisbogenförmig, ausgeführt. Dies ist insbesondere eine besonders beanspruchungsgerechte Formgebung des Freischnitts, da abrupte Querschnittsübergänge und somit Beanspruchungsspitzen an dem Trägerprofil vermieden werden.

In weiterer Ausgestaltung der Erfindung ist der Freischnitt mit einem an das Trägerprofil und/oder die Fixiervorrichtung gefügten Abschlussblech verblendet. Dadurch wird zum einen eine gefällige Optik und somit eine verbesserte Qualitätsanmutung der Trägereinheit erreicht, da der Freischnitt schnittkantenseitig abgedeckt ist. Zum anderen wird mittels des Abschlussblechs vermieden, dass Feuchtigkeit und/oder Schmutz in das Innere des Trägerprofils und/oder der Fixiervorrichtung eindringt. Das Abschlussblech kann insbesondere mit dem Trägerprofil verschweißt sein. Alternativ oder zusätzlich kann das Abschlussblech formschlüssig mit dem Trägerprofil und/oder der Fixiervorrichtung verbunden sein. Beispielsweise kann das Abschlussblech mit dem Trägerprofil und/oder der Fixiervorrichtung verrastet sein. Alternativ kann das Abschlussblech einstückig mit einem Gehäuse der Fixiervorrichtung ausgebildet sein.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematischer Perspektivdarstellung eine auf einem Fahrzeugdach eines Personenkraftwagens montierte Dachträgeranordnung mit einer Ausführungsform einer erfindungsgemäßen Trägereinheit,
- Fig. 2: in schematischer, teilweise abgeschnittener Perspektivdarstellung die Trägereinheit nach Fig. 1 im Bereich einer Fixiervorrichtung,
- Fig. 3: in einer weiteren teilweise abgeschnittenen, schematischen Perspektivdarstellung die Trägereinheit nach den Fig. 1 und 2 mit einer in einer Aufnahmeaussparung aufgenommenen, generisch geformten Radachse,
- Fig. 4: in teilweise abgeschnittener, schematischer Seitenansicht die Trägereinheit nach den Fig. 1 bis 3 mit der Radachse nach Fig. 3,
- Fig. 5: die Trägereinheit nach den Fig. 1 bis 4 in einer vergrößerten, teilweise abgeschnittenen Längsschnittdarstellung im Bereich der Fixiervorrichtung und
- Fig. 6: in schematischer, teilweiser abgeschnittener Perspektivdarstellung eine weitere Ausführungsform einer erfindungsgemäßen Trägereinheit.

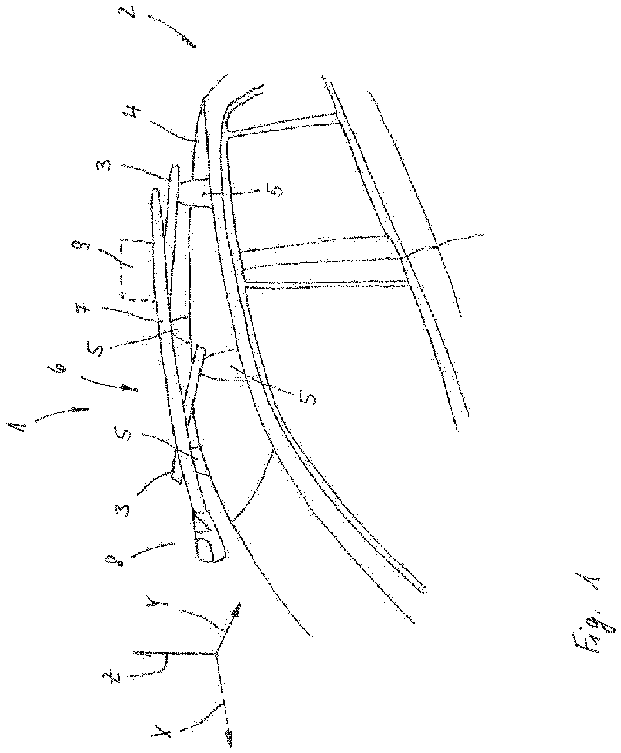

Gemäß Fig. 1 ist eine Dachträgeranordnung 1 fahrzeugdachseitig an einem Personenkraftwagen 2 montiert und zum Transport eines nicht näher dargestellten Fahrrads vorgesehen. Die Dachträgeranordnung 1 weist zwei in Fahrzeuglängsrichtung X zueinander beabstandete Querträgerprofile 3 auf, die in Fahrzeugquerrichtung Y über ein Fahrzeugdach 4 des Personenkraftwagens 2 erstreckt sind. Die Querträgerprofile 3 weisen an ihren in Fahrzeugquerrichtung Y gegenüberliegenden Stirnenden jeweils einen Stützfuß 5 auf. Die Querträgerprofile 3 sind mittels der Stützfüße 5 jeweils auf grundsätzlich bekannte Weise fest mit dem Fahrzeugdach 4 verbunden. Weiter weist die Dachträgeranordnung 1 eine Trägereinheit 6 auf, die in Fahrzeughochrichtung Z oberhalb der Querträgerprofile 3 angeordnet ist.

Die Trägereinheit 6 weist ein Trägerprofil 7 auf, das in Fahrzeuglängsrichtung X über das Fahrzeugdach 4 erstreckt und auf grundsätzlich bekannte Weise lösbar mit den Querträgerprofilen 3 verbunden ist. Das Trägerprofil 7 ist vorliegend aus Leichtmetall gefertigt. Weiter weist die Trägereinheit 6 eine Fixiervorrichtung 8 auf. Die Fixiervorrichtung 8 ist in Bezug auf die Fahrzeuglängsrichtung X frontseitig an dem Trägerprofil 7 angeordnet und zur Fixierung einer Fahrradgabel des zu transportierenden Fahrrads vorgesehen. Heckseitig an dem Trägerprofil 7 ist eine anhand Fig. 1 lediglich strichliert angedeutete Haltevorrichtung 9 vorgesehen. Die Haltevorrichtung 9 dient der Halterung eines Hinterrads des zu transportierenden Fahrrads und kann auf grundsätzlich bekannte Weise ausgestaltet sein.

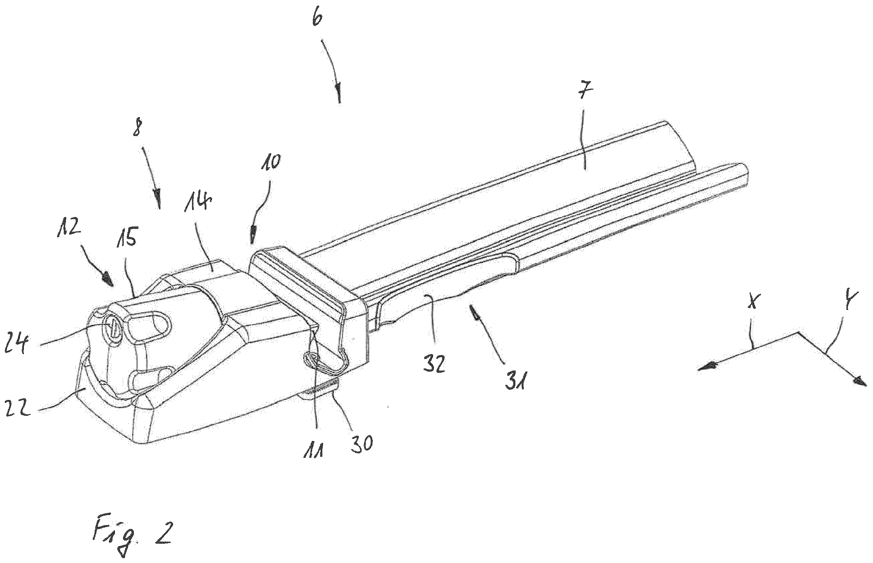

Wie weiter anhand der vergrößerten Darstellungen der Fig. 2 bis 5 ersichtlich ist, weist die Fixiervorrichtung 8 eine Aufnahmeaussparung 10, eine Spannbacke 11 sowie eine Stelleinheit 12 auf.

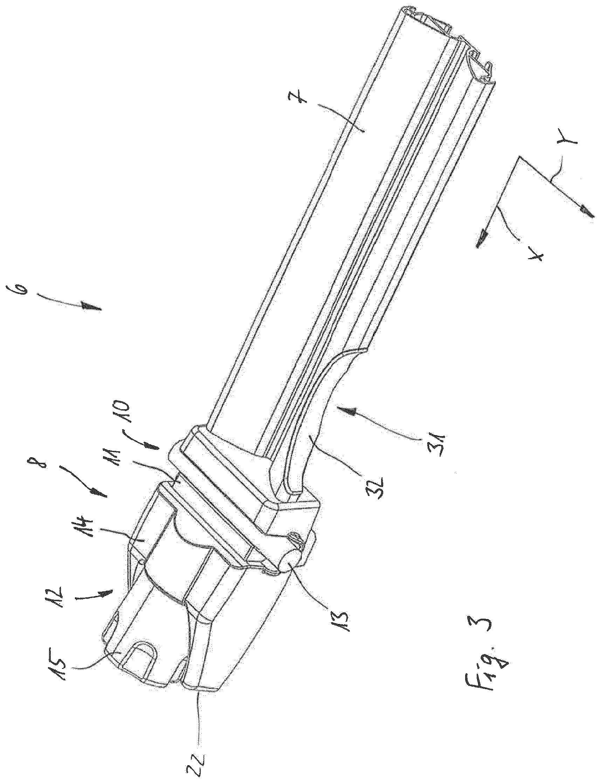

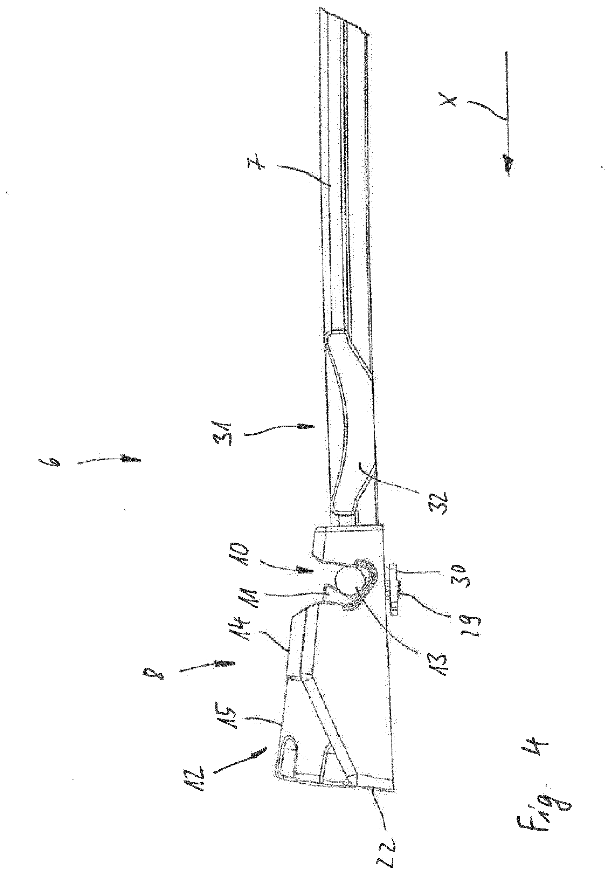

Die Aufnahmeaussparung 10 ist zur Aufnahme einer der Fahrradgabel zugeordneten Radachse 13 vorgesehen (Fig. 3, 4). Vorliegend ist die Aufnahmeaussparung 10 an einem Gehäuse 14 der Fixiervorrichtung 8 ausgebildet, das auf grundsätzlich bekannte Weise fest mit dem Trägerprofil 7 verbunden ist. Die Aufnahmeaussparung 10 ist in Form einer im Wesentlichen U-förmigen, nach oben offenen Rinne ausgebildet. Abmesserseitig ist die Aufnahmeaussparung 10 derart bemessen, dass verschiedenartig gestaltete Typen von Radgabeln in der Aufnahmeaussparung 10 aufgenommen werden können. Vorliegend ist die Aufnahmeaussparung 10 derart bemessen, dass Radachsen mit einem Durchmesser von 5 mm bis in etwa 20 mm aufgenommen werden können.

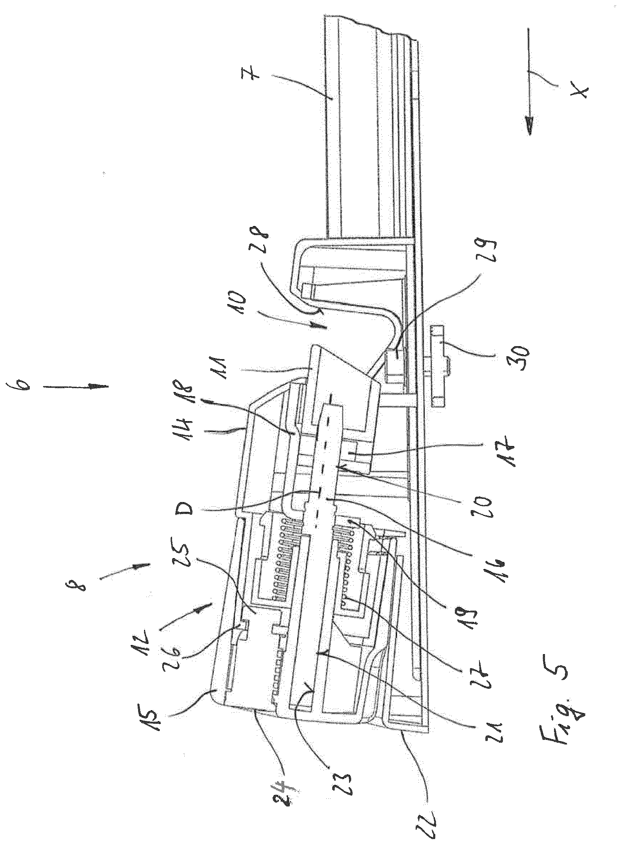

Die Spannbacke 11 ist relativ zu der Aufnahmeaussparung 10 zwischen einer Spannposition und einer Freigabeposition verlagerbar. In der Spannposition spannt die Spannbacke 11 die Radachse 13 in der Aufnahmeaussparung 10 ein. In der Freigabeposition gibt die Spannbacke 11 die Radachse 13 frei. Wie anhand der Fig. 3 und 4 verdeutlicht ist, ist die Radachse 13 in der Spannposition mittels der Spannbacke 11 formschlüssig in der Aufnahmeaussparung 10 gehalten. Demgegenüber ist die Aufnahmeaussparung in der Freigabeposition nach oben freigegeben (vgl. Fig. 2 und 5), so dass die Radachse 13 von oben in die Aufnahmeaussparung 10 eingesetzt oder nach oben aus der Aufnahmeaussparung entnommen werden kann. Vorliegend erstreckt sich die Spannbacke 11 in Fahrzeugquerrichtung Y im Wesentlichen über eine gesamte Breite der Aufnahmeaussparung 10. An ihrem der Aufnahmeaussparung 10 zugewandten Stirnende ist die Spannbacke 11 keilförmig von oben nach unten abgeschrägt. Aufgrund dieser keilförmigen Gestaltung der Spannbacke 11 bewirkt diese in der Spannposition eine von oben nach unten gerichtete Spannkraftkomponente auf die Radachse 13.

Die Stelleinheit 12 ist zur Verlagerung der Spannbacke 11 auf noch näher zu beschreibende Weise mit dieser wirkverbunden und weist ein Stellrad 15 und ein Schraubgetriebe 16, 17 auf (Fig. 5). Das Stellrad 15 ist antriebsseitig und die Spannbacke 11 ist abtriebsseitig mit dem Schraubgetriebe 16, 17 wirkverbunden, wobei die Stelleinheit 12 derart gestaltet ist, dass die Spannbacke 11 mittels einer manuellen Drehbetätigung des Stellrads 15 zwischen der Freigabeposition und der Spannposition verlagerbar ist.

Vorliegend ist das Stellrad 15 um eine Drehachse D drehbetätigbar, die im Wesentlichen in Längsrichtung des Trägerprofils 7 und somit in etwa in Fahrzeuglängsrichtung X erstreckt ist. Die Spannbacke 11 ist an einem Führungswandabschnitt 18 des Gehäuses 14 lineargeführt verlagerbar. Das Schraubgetriebe 16, 17 weist eine Gewindespindel 16 und eine Gewindemutter 17 auf. Die Gewindespindel 16 ist drehbeweglich und axialfest an einem Lagerabschnitt 19 gelagert. Vorliegend ist der Lagerabschnitt 19 einstückig mit dem Führungswandabschnitt 18 verbunden und dem Gehäuse 14 zugeordnet. Die Gewindemutter 17 ist auf einen gewindeführenden Gewindeabschnitt 20 der Gewindespindel 16 aufgeschraubt und drehfest an dem Führungswandabschnitt 18 gelagert. Das Stellrad 15 ist formschlüssig drehfest auf einen Schaftabschnitt 21 der Gewindespindel 16 aufgeschoben. Wie weiter anhand Fig. 5 ersichtlich ist, ist die Gewindemutter 17 zwischen zwei in Axialrichtung der Gewindespindel 16 gegenüberliegenden Wandabschnitten der Klemmbacke 11 formschlüssig festgelegt, so dass eine axiale Bewegung der Gewindemutter 17 längs des Gewindeabschnittes 20 auf die Klemmbacke 11 übertragbar ist.

Das Stellrad 15 ist relativ zu dem Gehäuse 14 lineargeführt verlagerbar zwischen einer nicht näher dargestellten Betätigungsposition und einer anhand der Fig. 1 bis 5 ersichtlichen Ruheposition. In der Ruheposition ist das Stellrad 15 kompakt an dem Gehäuse 14 angeordnet. Dabei ist das Stellrad 15 in Umfangsrichtung wenigstens abschnittsweise von einem vorderen Fortsatz 22 des Gehäuses 14 umgriffen. Wie insbesondere anhand Fig. 5 ersichtlich ist, ist das Stellrad 15 insbesondere an seiner Unterseite von dem Fortsatz 22 abgedeckt. In der Betätigungsposition überragt das Stellrad 15 das Gehäuse in axialer Richtung im Wesentlichen freistehend, so dass es in Umfangsrichtung auf einfache und sichere Weise vollständig umgriffen werden kann. Zur Verlagerung zwischen der Betätigungsposition und der Ruheposition ist das Stellrad 15 auf dem Schaftabschnitt 21 der Gewindespindel 16 axialbeweglich lineargeführt. Dabei ist eine Aufnahmebohrung 23 des Stellrads 15 derart auf die Formgebung und Abmessungen des Schaftabschnitts 21 abgestimmt, dass sich zum einen eine toleranzgerechte drehfeste Verbindung und zum anderen eine hinreichend leichtgängige Axialbeweglichkeit des Stellrads 15 ergibt. In eine stirnendseitige Öffnung des Stellrads 15 eingebracht ist eine Verriegelungseinheit 24 vorgesehen, mittels der das Stellrad 15 in der Ruheposition drehfest und axialfest an dem Gehäuse 14 verriegelbar ist. Vorliegend ist die Verriegelungseinheit 24 in Form eines grundsätzlich bekannten Schließzylinders ausgeführt. In einem abgeschlossenen Zustand hintergreift ein Verriegelungsfortsatz 25 der Verriegelungseinheit 23 einen Verriegelungsabschnitt 26 des Gehäuses 14 derart, dass das Handrad 15 weder drehbetätigt noch lineargeführt in die Betätigungsposition verlagert werden kann.

Zum Einspannen der Radachse 13 wird - ausgehend von der anhand Fig. 5 ersichtlichen Konfiguration - zunächst das Handrad 15 mittels der Verriegelungseinheit 24 von dem Gehäuse 14 entriegelt. Eine einends an dem Lagerabschnitt 19 abgestützte, koaxial zu der Drehachse D orientierte und andernends mit dem Stellrad 15 wirkverbundene Spiralfeder 27 bewirkt, dass das Stellrad 15 auf dem Schaftabschnitt 21 federunterstützt lineargeführt in die Betätigungsposition verlagert wird. Hierbei bleibt die Gewindespindel 16 axialfest. Ebenso erfährt die Klemmbacke 11 hierbei keinerlei axiale Verlagerung. In der Betätigungsposition wird das Stellrad 15 manuell in Umfangsrichtung umgriffen. Mittels einer Drehbetätigung des Stellrads 15 wird die Gewindespindel 16 über die formschlüssige, drehfeste Verbindung zwischen dem Schaftabschnitt 21 und dem Stellrad 15 um ihre Drehachse D rotiert. Hierbei erfährt die Gewindemutter 17 eine axiale Bewegung entlang des Gewindeabschnitts 20. Aufgrund der formschlüssigen Verbindung der Gewindemutter 17 mit der Klemmbacke 11 wird diese dementsprechend mitbewegt. Vorliegend wird die Klemmbacke 11 bei einer in Blickrichtung auf das Stirnende des Stellrads im Uhrzeigersinn gerichteten Drehung an dem Führungswandabschnitt 18 in das Gehäuse 14 verlagert. Demzufolge wird die Aufnahmeaussparung 10 in Fahrzeuglängsrichtung X nach oben freigegeben, bis ein ausreichend breiter Spalt zwischen der Klemmbacke 11 und einem in Spannrichtung gegenüberliegenden Wandabschnitt 28 gebildet ist. Hiernach kann die Radachse 13 von oben nach unten in die Aufnahmeaussparung 10 eingebracht werden. Durch eine entsprechend entgegengesetzte Drehbetätigung des Stellrads 15 wird die Klemmbacke 11 in Axialrichtung der Gewindespindel 16 radial an den Außenumfang der Radachse 13 angestellt, bis diese sicher in der Aufnahmeaussparung 10 eingespannt ist. Hierbei bewirkt die keilförmige Gestaltung der Spannbacke 11, dass die Spannbacke 11 in der Spannposition eine von oben nach unten gerichtete Spannkraftkomponente auf die Radachse 13 bewirkt. Hiernach wird das Stellrad 15 von der Betätigungsposition in Axialrichtung der Gewindespindel 16 in die Ruheposition überführt und mittels der Verriegelungseinheit 24 drehfest und axialfest an dem Gehäuse 14 verriegelt.

Wie weiter insbesondere anhand Fig. 5 ersichtlich ist, ist im Bereich der Aufnahmeaussparung 10 ein Befestigungselement 29 zur lösbaren Befestigung des Trägerprofils 6 an einem der Querträgerprofile 3 vorgesehen (Fig. 1). Vorliegend ist das Befestigungselement 29 in Form einer Innensechskantschraube gefertigt, die mit einem Formschlusselement 30 versehen ist. In montiertem Zustand greift das Formschlusselement 30 in eine nicht näher ersichtliche Befestigungsnut des - in Bezug auf die Zeichenebene der Fig. 1 - vorderen Querträgerprofils 3 ein.

Das Befestigungselement 29 ist mittels der Spannbacke 11 grundsätzlich manuell unzugänglich überdeckt. Auf diese Weise wird verhindert, dass die Trägereinheit 6 ohne weiteres von der Dachträgeranordnung entwendet werden kann. Zur Montage und Demontage der Trägereinheit 6 an den Querträgerprofilen 3 ist die Spannbacke 11 mittels einer manuellen Drehbetätigung des Stellrads 15 in eine nicht näher dargestellte Funktionsposition verlagerbar, in der das Befestigungselement 29 manuell zugänglich ist. In der Funktionsposition ist die Klemmbacke 11 im Wesentlichen vollständig in das Gehäuse 14 hineinverlagert, so dass das Befestigungselement 29 von oben mit einem entsprechenden Werkzeug erreicht und gelöst werden kann. Wie weiter anhand der Fig. 2 bis 4 ersichtlich ist, ist das Trägerprofil 7 in einem an die Aufnahmeaussparung 10 angrenzenden Bereich mit einem Freischnitt 31 versehen. Der Freischnitt 31 ist derart angeordnet und gestaltet, dass - in einem in der Fixiervorrichtung 8 fixierten Zustand der Fahrradgabel - eine Kollision eines Bremssattels der Fahrradgabel mit dem Trägerprofil 7 vermieden ist. Zu diesem Zweck ist der Freischnitt 31 über eine Länge erstreckt, die in etwa der Länge der Fixiervorrichtung 8 entspricht. In Fahrzeugquerrichtung Y reicht der Freischnitt vorliegend über in etwa ein Drittel der Tiefe des Trägerprofils 7. Der Freischnitt 31 ist vorliegend - in Bezug auf eine vertikal von oben nach unten orientierte Blickrichtung - bogenförmig ausgeführt und mit einem Abschlussblech 32 verblendet.

Das Abschlussblech 32 ist vorliegend mit dem Trägerprofil 7 verschweißt. Alternativ kann das Abschlussblech 32 formschlüssig mit dem Trägerprofil 7 verbunden sein, beispielsweise mittels einer Rastverbindung oder dergleichen.

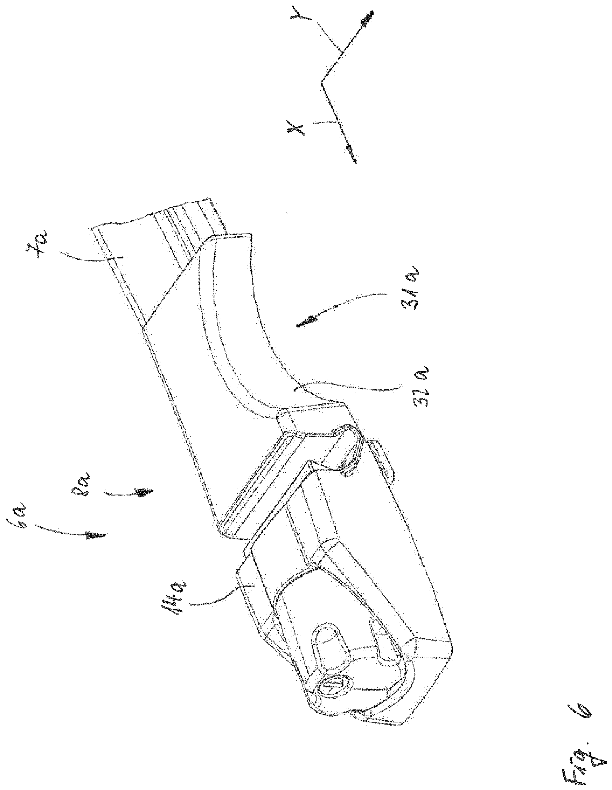

Anhand Fig. 6 ist eine weitere Ausführungsform einer erfindungsgemäßen Trägereinheit 6a ersichtlich. Die Trägereinheit 6a nach der Fig. 6 entspricht im Wesentlichen der zuvor anhand der Fig. 1 bis 5 beschriebenen Ausführungsform. Zur Vermeidung von Wiederholungen wird daher auf die Offenbarung zur Ausführungsform nach den Fig. 2 bis 5 verwiesen. Nachfolgend wird lediglich auf die wesentlichen Unterschiede der Trägereinheit 6a gegenüber der Trägereinheit 6 eingegangen. Insbesondere funktions- oder baugleiche Abschnitte und Teile der Ausführungsform nach Fig. 6 sind nicht gesondert mit Bezugszeichen versehen. Bauteile und Abschnitte, die jedoch in ihrer konstruktiven Ausführung unterschiedlich sind, sind mit gleichen Bezugszeichenziffern unter Hinzufügung des Kleinbuchstabens a bezeichnet.

Die Trägereinheit 6a unterscheidet sich im Wesentlichen dahingehend von der Trägereinheit 6, dass eine unterschiedliche Gestaltung im Hinblick auf die Ausbildung des Freischnittes vorgesehen ist. Vorliegend ist ein Freischnitt 31a an einem Gehäuse 14a der Fixiervorrichtung 8a vorgesehen. Das Gehäuse 14a ist gegenüber dem Gehäuse 14 der Trägereinheit 6 in Fahrzeuglängsrichtung X verlängert, wobei der Freischnitt 31a nicht spanend aus dem Gehäuse 14a herausgetrennt, sondern mittels einer entsprechenden Formgebung eines dem Gehäuse 14a zugrunde liegenden Kunststoffgusswerkzeugs hergestellt ist. Demgemäß ist ein Abschlussblech 32a vorgesehen, dass einstückig mit dem Gehäuse 14a ausgebildet ist. Ein Trägerprofil 7a der Trägereinheit 6a weist im Unterschied zu dem Trägerprofil 7 der Ausführungsform nach den Fig. 1 bis 5 keinen Freischnitt auf.

## Patentansprüche

1. Trägereinheit (6, 6a) für eine Dachträgeranordnung (1) eines Kraftfahrzeugs (2) mit einem Trägerprofil (7, 7a), das sich in montiertem Zustand in Fahrzeuglängsrichtung (X) über ein Fahrzeugdach (4) erstreckt, und einer einends an dem Trägerprofil (7, 7a) angeordneten Fixiervorrichtung (8, 8a) zur Fixierung einer Fahrradgabel mit einer Aufnahmeaussparung (10) zur Aufnahme einer der Fahrradgabel zugeordneten Radachse (13), einer Spannbacke (11), die relativ zu der Aufnahmeaussparung (10) verlagerbar ist zwischen einer Spannposition, in der die Spannbacke (11) die Radachse (13) in der Aufnahmeaussparung (10) einspannt, und einer Freigabeposition, in der die Spannbacke (11) die Radachse (13) freigibt, und einer mit der Spannbacke (11) wirkverbundenen manuell betätigbaren Stelleinheit (12) zum Verlagern der Spannbacke (11), wobei die Stelleinheit (12) ein manuell drehbetätigbares Stellrad (15) und ein Schraubgetriebe (16, 17) aufweist, wobei das Stellrad (15) antriebsseitig und die Spannbacke (11) abtriebsseitig mit dem Schraubgetriebe (16, 17) wirkverbunden sind und die Stelleinheit (12) derart gestaltet ist, dass die Spannbacke (11) mittels einer manuellen Drehbetätigung des Stellrads (15) zwischen der Freigabeposition und der Spannposition verlagerbar ist, **dadurch gekennzeichnet, dass** die Aufnahmeaussparung (10) in Form einer im Wesentlichen U-förmigen - in Bezug auf einen fahrzeugdachseitig montierten Zustand - nach oben offenen Rinne gestaltet ist und die Spannbacke (11) derart keilförmig gestaltet ist, dass die Spannbacke (11) in der Spannposition eine von oben nach unten gerichtete Spannkraftkomponente auf die Radachse (13) bewirkt.

2. Trägereinheit (6, 6a) nach Anspruch 1, **dadurch gekennzeichnet, dass** das Stellrad (15) um eine Drehachse (D) drehbetätigbar ist, die im Wesentlichen in Längsrichtung des Trägerprofils (7, 7a) erstreckt ist, und die Spannbacke (11) im Wesentlichen in Längsrichtung des Trägerprofils (7, 7a) lineargeführt zwischen der Freigabeposition und der Spannposition verlagerbar ist.

3. Trägereinheit (6, 6a) nach Anspruch 1 oder 2, **dadurch gekennzeichnet, dass** das Schraubgetriebe (16, 17) eine drehbeweglich und axialfest gelagerte Gewindespindel (16), die drehfest mit dem Stellrad (15) verbunden ist, und eine axial beweglich auf der Gewindespindel (16) angeordnete sowie drehfest gelagerte Gewindemutter (17), die der Spannbacke (11) zugeordnet ist, aufweist.

4. Trägereinheit (6, 6a) nach einem der vorhergehenden Ansprüche, **dadurch gekennzeichnet, dass** das Stellrad (15) relativ zu einem Gehäuse (14, 14a) der Fixiervorrichtung (8, 8a) lineargeführt verlagerbar ist zwischen einer Betätigungsposition, in der das Stellrad (15) das Gehäuse (14, 14a) stirnendseitig im Wesentlichen freistehend überragt, und einer Ruheposition, in der das Stellrad (15) kompakt an dem Gehäuse (14, 14a) angeordnet ist.

5. Trägereinheit (6, 6a) nach Anspruch 4, **dadurch gekennzeichnet, dass** eine abschließbare Verriegelungseinheit (24) vorgesehen ist, mittels der das Stellrad (15) in der Ruheposition drehfest und axialfest an dem Gehäuse (14, 14a) verriegelbar ist.

6. Trägereinheit (6, 6a) nach Anspruch 4 oder 5, **dadurch gekennzeichnet, dass** das Stellrad (15) auf einem Schaftabschnitt (21) der Gewindespindel (16) lineargeführt in Axialrichtung der Gewindespindel (16) zwischen der Betätigungsposition und der Ruheposition verlagerbar ist.

7. Trägereinheit (6, 6a) nach einem der vorhergehenden Ansprüche, **dadurch gekennzeichnet, dass** im Bereich der Aufnahmeaussparung (10) wenigstens ein Befestigungselement (29) zur lösbaren Befestigung des Trägerprofils (7, 7a) an einem in montiertem Zustand in Fahrzeugquerrichtung (Y) erstreckten Querträgerprofil (3) der Dachträgeranordnung (1) vorgesehen ist.

8. Trägereinheit (6, 6a) nach Anspruch 7, **dadurch gekennzeichnet, dass** das Befestigungselement (29) mittels der Spannbacke (11) grundsätzlich manuell unzugänglich überdeckt ist, wobei die Spannbacke (11) mittels einer manuellen Drehbetätigung des Stellrads (15) in eine Funktionsposition verlagerbar ist, in der das Befestigungselement (29) manuell zugänglich ist.

9. Trägereinheit (6, 6a) nach einem der vorhergehenden Ansprüche, **dadurch gekennzeichnet, dass** das Trägerprofil (7) und/oder die Fixiervorrichtung (8a) in einem an die Aufnahmeaussparung (10) angrenzenden Bereich mit einem Freischnitt (31, 31a) versehen ist, der derart angeordnet und gestaltet ist, dass - in einem in der Fixiervorrichtung (8, 8a) fixierten Zustand der Fahrradgabel - eine Kollision eines Bremssattels der Fahrradgabel mit dem Trägerprofil (7) und/oder der Fixiervorrichtung (8a) vermieden ist.

10. Trägereinheit (6, 6a) nach Anspruch 9, **dadurch gekennzeichnet, dass** der Freischnitt (31, 31a) - in Bezug auf eine vertikal orientierte Blickrichtung - bogenförmig, insbesondere kreisbogenförmig, ausgeführt ist.

11. Trägereinheit (6, 6a) nach Anspruch 9 oder 10, **dadurch gekennzeichnet, dass** der Freischnitt (31, 31a) mit einem an das Trägerprofil (7) und/oder die Fixiervorrichtung (8a) gefügten Abschlussblech (32, 32a) verblendet ist.

## Claims

1. Support unit (6, 6a) for a roof rack arrangement (1) of a motor vehicle (2) having a support profile (7, 7a) extending, in the installed condition, over a vehicle roof (4) in the vehicle longitudinal direction (X), and a fixing device (8, 8a) disposed on one end at the support profile (7, 7a) for fixing a bicycle fork with a receiving recess (10) for receiving a wheel axle (13) associated with the bicycle fork, a clamping jaw (11) displaceable relative to the receiving recess (10) between a clamping position, in which the clamping jaw (11) clamps the wheel axle (13) in the receiving recess (10), and a release position, in which the clamping jaw (11) releases the wheel axle (13), and a manually actuatable setting unit (12) in operative connection to the clamping jaw (11) for displacing the clamping jaw (11), wherein the setting unit (12) includes a setting wheel (15) for manual rotary actuation and a worm gear (16, 17), wherein the setting wheel (15) on the drive side and the clamping jaw (11) on the output side are in operative connection to the worm gear (16, 17) and the setting unit (12) is configured such that the clamping jaw (11) is displaceable between the release position and the clamping position by means of a manual rotary actuation of the setting wheel (15),
**characterized in that**
the receiving recess (10) is configured in the form of an essentially U-shaped, in relation to an installed condition on the vehicle roof side, channel open towards the top and the clamping jaw (11) is configured in a wedge shape such that the clamping jaw (11) in the clamping position causes a clamping force component oriented from top to bottom on the wheel axle (13).

2. Support unit (6, 6a) according to claim 1, **characterized in that** the setting wheel (15) is actuatable by rotation about a rotation axis (D) which extends essentially in the longitudinal direction of the support profile (7, 7a), and the clamping jaw (11) is displaceable in linear guiding essentially in the longitudinal direction of the support profile (7, 7a) between the release position and the clamping position.

3. Support unit (6, 6a) according to claim 1 or 2, **characterized in that** the worm gear (16, 17) includes a threaded spindle (16) mounted for rotary movement and axially fixed, which spindle is connected to the setting wheel (15) in a torque-proof manner, and a threaded nut (17) disposed axially movable on the threaded spindle (16) and mounted in a torque-proof manner, which nut is associated with the clamping jaw (11).

4. Support unit (6, 6a) according to any one of the preceding claims, **characterized in that** the setting wheel (15) is displaceable relative to a housing (14, 14a) of the fixing device (8, 8a) in linear guiding between an operation position, in which the setting wheel (15) projects beyond the housing (14, 14a) on a face end side essentially in a cantilever manner, and in a rest position, in which the setting wheel (15) is disposed compact on the housing (14, 14a).

5. Support unit (6, 6a) according to claim 4, **characterized in that** a lockable latching unit (24) is provided, by means of which the setting wheel (15) can be latched on the housing (14, 14a) in the rest position in a torque-proof and axially fixed manner.

6. Support unit (6, 6a) according to claim 4 or 5, **characterized in that** the setting wheel (15) is displaceable on a shaft portion (21) of the threaded spindle (16) in linear guiding in the axial direction of the threaded spindle (16) between the operating position and the rest position.

7. Support unit (6, 6a) according to any one of the preceding claims, **characterized in that**, in the vicinity of the receiving recess (10), at least one fastening element (29) for detachable fastening of the support profile (7, 7a) is provided on a cross member profile (3) of the roof rack arrangement (1) extending in the vehicle transverse direction (Y) in the installed condition.

8. Support unit (6, 6a) according to claim 7, **characterized in that** the fastening element (29) by means of the clamping jaw (11) is generally covered and manually inaccessible, wherein the clamping jaw (11) by means of a manual rotary actuation of the setting wheel (15) is displaceable to a functional position, in which the fastening element (29) is manually accessible.

9. Support unit (6, 6a) according to any one of the preceding claims, **characterized in that** the support profile (7, 7a) and/or the fixing device (8a) is provided with a free punch (31, 31a) in a region adjoining the receiving recess (10), which free punch is arranged and configured such that, in a fixed condition of the bicycle fork in the fixing device (8, 8a), a collision of a brake calliper of the bicycle fork with the support profile (7) and/or the fixing device (8a) is prevented.

10. Support unit (6, 6a) according to claim 9, **characterized in that** the free punch (31, 31a), in relation to a vertically oriented viewing direction, is designed in an arch shape, in particular a circular arch shape.

11. Support unit (6, 6a) according to claim 9 or 10, **characterized in that** the free punch (31, 31a) is faced with a cover plate (32, 32a) joined to the support profile (7) and/or the fixing device (8a).

## Revendications

1. Unité porteuse (6, 6a) pour un arrangement de galerie de toit (1) d'un véhicule automobile (2) comprenant un profilé de support (7, 7a) s'étendant, à l'état monté, sur un toit de véhicule (4) dans la direction longitudinale du véhicule (X), et un dispositif de fixation (8, 8a) disposé à une extrémité du profilé de support (7, 7a) pour fixer à une fourche de bicyclette avec une rainure de logement (10) pour le logement d'un axe de roue (13) associé à la fourche de bicyclette, une mâchoire de serrage (11) déplaçable par rapport à la rainure de logement (10) entre une position de serrage, où la mâchoire de serrage (1) enserre l'axe de roue (13) dans la rainure de logement (10), et une position de déblocage, où la mâchoire de serrage (11) déclenche l'axe de roue (13), et une unité de réglage (12) actionnable manuellement en liaison active avec la mâchoire de serrage (11) pour déplacer la mâchoire de serrage (11), l'unité de réglage (12) présentant une roue de réglage (15) actionnable en tournant manuellement et une transmission à vis (16, 17), la roue de réglage (15) côté menant et la mâchoire de serrage (11) côté mené étant en liaison active avec la transmission à vis (16, 17) et l'unité de réglage (12) configurée de telle manière que la mâchoire de serrage (11) par un actionnement tournant manuel de la roue de réglage (15) soit déplaçable entre la position de déblocage et la position de serrage,
**caractérisée en ce que**
la rainure de logement (10) est configurée sous forme essentiellement en U, par rapport à l'état monté côté toit de véhicule, d'un canal ouvert vers le haut et la mâchoire de serrage (11) est configurée sous forme de coin de telle manière que la mâchoire de serrage (11) dans la position de serrage provoque une composante de force de serrage orientée de haut en bas sur l'axe de roue (13).

2. Unité porteuse (6, 6a) selon la revendication 1, **caractérisée en ce que** la roue de réglage (15) est actionnable en tournant autour d'un axe de rotation (D) s'étendant essentiellement dans la direction longitudinale du profilé de support (7, 7a) et la mâchoire de serrage (11) est déplaçable essentiellement dans la direction longitudinale du profilé de support (7, 7a) en guidage linéaire entre la position de déblocage et la position de serrage.

3. Unité porteuse (6, 6a) selon la revendication 1 ou 2, **caractérisée en ce que** la transmission à vis (16, 17) présente une broche filetée (16) montée rotative et axialement fixe, ladite broche reliée solidairement à la roue de réglage (15), et un écrou fileté (17) monté mobile axialement sur la broche filetée (16) et relié solidairement, ledit écrou associé à la mâchoire de serrage (11).

4. Unité porteuse (6, 6a) selon l'une quelconque des revendications précédentes, **caractérisée en ce que** la roue de réglage (15) par rapport à un boîtier (14, 14a) du dispositif de fixation (8, 8a) est déplaçable en guidage linéaire entre une position d'actionnement, où la roue de réglage (15) fait saillie du boîtier (14, 14a) côté extrémité frontale essentiellement en cantilever, et une position de repos, où la roue de réglage (15) est disposée de manière compacte sur le boîtier (14, 14a).

5. Unité porteuse (6, 6a) selon la revendication 4, **caractérisée en ce qu'**une unité de verrouillage (24) fermable est prévue, au moyen de laquelle la roue de réglage (15) dans la position de repos peut être verrouillée solidairement et axialement fixe sur le boîtier (14, 14a).

6. Unité porteuse (6, 6a) selon la revendication 4 ou 5, **caractérisée en ce que** la roue de réglage (15) est déplaçable sur une partie de tige (21) de la broche filetée (16) en guidage linéaire dans la direction axiale de la broche filetée (16) entre la position d'actionnement et la position de repos.

7. Unité porteuse (6, 6a) selon l'une quelconque des revendications précédentes, **caractérisée en ce que**, dans la zone de la rainure de logement (10), au moins un élément d'attache (29) pour l'attachement amovible du profilé de support (7, 7a) à un profilé de traverse (3) de l'arrangement de galerie de toit (1) s'étendant à l'état monté dans la direction transversale du véhicule (Y) est prévu.

8. Unité porteuse (6, 6a) selon la revendication 7, **caractérisée en ce que** l'élément d'attache (29) est recouvert par la mâchoire de serrage (11) en principe inaccessible manuellement, dans laquelle la mâchoire de serrage (11) par un actionnement tournant manuel de la roue de réglage (15) est déplaçable vers une position fonctionnelle où l'élément d'attache (29) est accessible manuellement.

9. Unité porteuse (6, 6a) selon l'une quelconque des revendications précédentes, **caractérisée en ce que** le profilé de support (7) et/ou le dispositif de fixation (8a) est pourvu, dans une zone adjacente à la rainure de logement (10), d'une découpe libre (31, 31a), ladite coupe étant arrangée et configurée de telle manière que, dans un état de la fourche de bicyclette fixé dans le dispositif de fixation (8, 8a), une collision d'un étrier de frein de la fourche de bicyclette avec le profilé de support (7) et/ou le dispositif de fixation (8a) est évitée.

10. Unité porteuse (6, 6a) selon la revendication 9, **caractérisée en ce que** la découpe libre (31, 31a), par rapport à une direction de vision orientée verticalement, se présente sous forme arquée, en particulier arc de cercle.

11. Unité porteuse (6, 6a) selon la revendication 9 ou 10, **caractérisée en ce que** la découpe libre (31, 31a) est revêtue par une tôle de fermeture (32, 32a) ajoutée au profilé de support (7) et/ou au dispositif de fixation (8a).
